(19) **Europäisches Patentamt** / **European Patent Office** / **Office européen des brevets**

(11) **EP 1 977 578 B1**

(12) **FASCICULE DE BREVET EUROPEEN**

(45) Date de publication et mention de la délivrance du brevet:
**13.06.2018 Bulletin 2018/24**

(21) Numéro de dépôt: **07712653.0**

(22) Date de dépôt: **02.01.2007**

(51) Int Cl.:
**H04L 27/26** (2006.01)     **H04L 25/02** (2006.01)

(86) Numéro de dépôt international:
**PCT/FR2007/050601**

(87) Numéro de publication internationale:
**WO 2007/077403 (12.07.2007 Gazette 2007/28)**

(54) **PROCEDE ET DISPOSITIF DE SELECTION DYNAMIQUE DE FONCTIONS ORTHOGONALES D'UN SYSTEME DE TRANSMISSION ORTHOGONAL**

VERFAHREN UND VORRICHTUNG ZUR DYNAMISCHEN AUSWAHL ORTHOGONALER FUNKTIONEN EINES ORTHOGONALEN ÜBERTRAGUNGSSYSTEMS

METHOD AND DEVICE FOR DYNAMICALLY SELECTING ORTHOGONAL FUNCTIONS OF AN ORTHOGONAL TRANSMISSION SYSTEM

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **30.12.2005 FR 0554159**

(43) Date de publication de la demande:
**08.10.2008 Bulletin 2008/41**

(73) Titulaire: **Orange**
**75015 Paris (FR)**

(72) Inventeurs:
- **SIAUD, Isabelle**
  **F-35000 Rennes (FR)**
- **ULMER-MOLL, Anne-Marie**
  **F-35000 Rennes (FR)**

(56) Documents cités:
**FR-A- 2 854 020**     **US-A1- 2004 178 934**
**US-B1- 6 704 366**

- **ANUJ BATRA ET AL: "TI Physical Layer Proposal for IEEE 802.15 Task Group 3a" IEEE P802.15 WIRELESS PERSONAL AREA NETWORKS, 12 mai 2003 (2003-05-12), XP002377175**

**Description**

La présente invention se rapporte au domaine des télécommunications. Au sein de ce domaine, l'invention se rapporte plus particulièrement aux communications dites numériques. Les communications numériques comprennent en particulier les communications sans fil ; elles comprennent aussi par exemple les communications filaires. Le support de transmission des communications est couramment appelé canal de transmission ou de propagation, à l'origine en référence à un canal aérien et par extension en référence à tout canal.

L'invention concerne les techniques d'entrelacement combinées à un procédé de sélection de fonctions parmi plusieurs fonctions utilisées pour transmettre l'information utile d'un système de transmission où l'information utile est projetée sur une base de fonctions dites orthogonales. La sélection d'une ou plusieurs fonctions suivant un critère externe est assimilée à une extension d'une technique de diversité par sélection. Les techniques de diversité usuellement mises en oeuvre procèdent d'une duplication de l'information à transmettre suivie d'une sélection en réception d'un des signaux suivant un critère externe conduisant à une amélioration des performances. Le procédé ici ne duplique pas l'information à transmettre mais sélectionne préalablement les fonctions appropriées à la transmission des données lorsque le signal est décomposé sur une base de fonctions orthogonales de dimension supérieure à celle du signal à transmettre. Le signal est formé par des composantes porteuses d'information et des composantes non porteuses d'information. La sélection consiste à éliminer les fonctions fortement bruitées pour transmettre les données lorsque le système est soumis à un canal de transmission sélectif en fréquence. Ce procédé conduit à une réduction de bruit ou élimination d'un signal parasite affectant l'une des fonctions en réception.

L'invention s'applique en particulier à tout type de système de transmission à porteuses multiples orthogonales, pour lequel l'information mise sous la forme de symboles de données (cellules QAM, QPSK, ...) est multiplexée sur Npm sous-porteuses orthogonales parmi $N_{FFT}$ sous-porteuses correspondant à une subdivision fréquentielle de la bande instantanée du système de transmission de dimension $N_{FFT}$. Le module effectuant le multiplexage des symboles de donnée sur les différentes sous-porteuses est désigné par les termes multiplex OFDM (en anglais « Orthogonal Frequency Division Multiplexing »). Il répartit les symboles de données et les symboles pilotes dans la bande passante du système. Les symboles pilotes ont des valeurs connues du récepteur et sont utilisés pour l'estimation du support de transmission ou la synchronisation dans le domaine fréquentiel. Des porteuses de garde nulles sont optionnellement localisées sur les bords du spectre ainsi que sur la porteuse centrale. La sortie du multiplex OFDM résultant de la sommation des $N_{FFT}$ sous-porteuses qui modulent les symboles constitue le signal OFDM en temps sans intervalle de garde. Il est obtenu en appliquant une transformée de Fourier Indirecte (TFI) de taille $N_{FFT}$ sur le multiplex OFDM. Le modulateur OFDM comprend le multiplex OFDM, l'opération de sommation des NFFT symboles modulés et l'insertion de l'intervalle de garde correspondant à une copie de la fin de la sortie du multiplex OFDM. Par analogie, un module de multiplexage et de modulation par des fonctions orthogonales des symboles transmis est indifféremment désigné par le terme multiplex orthogonal dans la suite du document.

L'information transmise est généralement soumise à une perturbation fréquentielle sélective en temps et en fréquence traduisant l'effet d'un canal de transmission dont la fonction de transfert H(f,t) est fortement colorée en raison de l'effet multi-trajet du canal de propagation, ainsi qu'à une forte dispersion Doppler résultant des variations temporelles de l'environnement ou bien résultant d'un signal parasite affectant certaines sous-porteuses du système de transmission. Cette perturbation est représentée par un filtre sélectif en fréquence et variable dans le temps qui filtre la sortie du modulateur OFDM.

En réception, après élimination de l'intervalle de garde Tcp, la projection du signal OFDM sur les composantes de Fourier associées à la sous-porteuse k et l'intégration sur l'ensemble des échantillons du signal OFDM (sortie du multiplex OFDM) fournit une estimation $Y_{nk}$ du symbole C'n,k alloué à la porteuse k du multiplex OFDM qui est pondéré par la composante k ($H_{n,k}$) de la fonction de transfert du canal projetée sur les vecteurs de base du multiplex OFDM et assorti d'une composante de bruit blanche

$$Y_{n,k} = H_{n,k} \cdot \bar{C'}_{n,k} + B_{n,k} \qquad (1)$$

L'égalisation multiporteuse de type "zero-Forcing" consiste à diviser le signal reçu en fréquence $Y_{n,k}$ par une estimation du gains complexe $H_{n,k}$ pour extraire la valeur du symbole de données C'n,k assorti d'une composante de bruit colorée par $H^{-1}_{n,k}$. Le circuit de décision opère alors une décision pour estimer le symbole transmis parmi M valeurs possibles appartenant à un alphabet associé à la modulation mise en oeuvre (M-PSK, M-QAM, etc...).

Les performances du circuit de décision des symboles transmis en bande de base dépendent de la valeur de la fonction de transfert du support de transmission associée à la porteuse k qui module le symbole C'n,k considéré.

En outre, le support de transmission génère en réception une corrélation des sous porteuses dans les domaines fréquentiel et temporel. La corrélation fréquentielle affecte les sous-porteuses et la corrélation temporelle induit des sous porteuses d'amplitude quasi constante sur une fenêtre d'observation de l'ordre du temps de cohérence du canal. Le temps de cohérence correspond à la valeur moyenne de l'écart temporel nécessaire pour assurer une décorrélation du signal représentatif du support de transmission avec sa version décalée temporellement.

Cette double corrélation limite les performances des circuits de décision en réception.

La corrélation temporelle induit des paquets d'erreurs après décision des symboles de données transmis et après décodage des bits transmis estimés.

La corrélation fréquentielle résulte à la fois de l'effet multitrajet qui introduit un filtrage, de l'effet Doppler et du bruit de phase des étages RF qui induisent une perte d'orthogonalité des sous-porteuses d'un multiplex orthogonal.

Une méthode pour remédier à cette double corrélation consiste à mettre en oeuvre à l'émission un entrelacement effectué sur les données binaires ou sur les symboles de données.

L'invention concerne plus particulièrement les entrelacements dits fréquentiels, c'est-à-dire les entrelacements effectués dans le domaine fréquentiel sur les symboles de données affectés aux porteuses d'un multiplex orthogonal. Ce type d'entrelacement intervient en entrée d'un multiplex orthogonal. De manière équivalente, on parle couramment d'entrelacement de porteuses ou de sous-porteuses.

Les systèmes multiporteuses existants qui comportent un entrelacement des sous-porteuses d'un multiplex orthogonal mettent en oeuvre une loi statique I(k), pour k variant de 0 à Npm-1 où Npm désigne le nombre de symboles de données par multiplex OFDM, pour un mode de transmission spécifique (codage modulation, taille de transformée de Fourier). Le document ETSI 300 401, "Radio broadcasting systems; Digital Audio Broadcasting (DAB) to mobile, portable and fixed receivers", May 1997, p182 donne une description d'un algorithme d'entrelacement fréquentiel statique du système multi porteuse DAB. Le brevet US 6704366 porte sur un algorithme d'entrelacement du même type que celui du DAB. La loi d'entrelacement I(k) appliquée sur les symboles de données indicés de k=0 à Npm-1 est telle que la branche k' du multiplex supportant le symbole Xn,k' résultant d'une opération d'entrelacement, est reliée au symbole C'n,k avant entrelacement par la relation $X_{n,k'} = C'_{n,I(k)}$, $I(k) \in \{0,...N_{pm}\text{-}1\}$ où I(k) décrit l'ordre de lecture dans la séquence d'entrée des indices de positions des porteuses après entrelacement.

En désignant par k' l'indice de position du symbole $X_{n,k'}$ sur le multiplex OFDM après entrelacement des sous-porteuses de données du multiplex et C'n,k le symbole de donnée associé à la porteuse k avant entrelacement, le symbole reçu correspondant, après démodulation OFDM, associé à la porteuse k' est de la forme :

$$Y_{n,k'} = X_{n,k'} \cdot \hat{H}_{n,k'} + B_{n,k'} \ avec \ k' = \left\{0, ....N_{pm} - 1\right\} \qquad (2)$$

L'opération de désentrelacement des sous-porteuses désignée par la fonction $I^{-1}(k)$ génère un signal tel que :

$$Y_{n,k} = C'_{n,k} \cdot H_{n,I^{-1}(k)} + B_{n,I^{-1}(k)}, \ k = \left\{0, ...,N_{pm}\text{-}1\right\} \qquad (3)$$

L'opération de désentrelacement réalisée sur les gains complexes $H_{n,k'}$ de la fonction de transfert du canal réduit la corrélation en fréquence instantanée du support de transmission mais ne réduit pas la corrélation temporelle qui limite les performances des entrelacements binaires situés en amont du procédé.

L'article d'Anuj Batra et al.:"TI Physical Layer Proposal for IEEE 802.15 Task Group 3a" IEEEP802.15 Wireless personal area networks, 12 mai 2003 (2003-05-12), XP002377175 décrit un entrelacement temps-fréquence par sauts de fréquence RF.

Le caractère statique de l'entrelacement limite les propriétés de décorrélation d'un procédé d'entrelacement car il ne modifie pas les propriétés de sélectivité en temps du support de transmission.

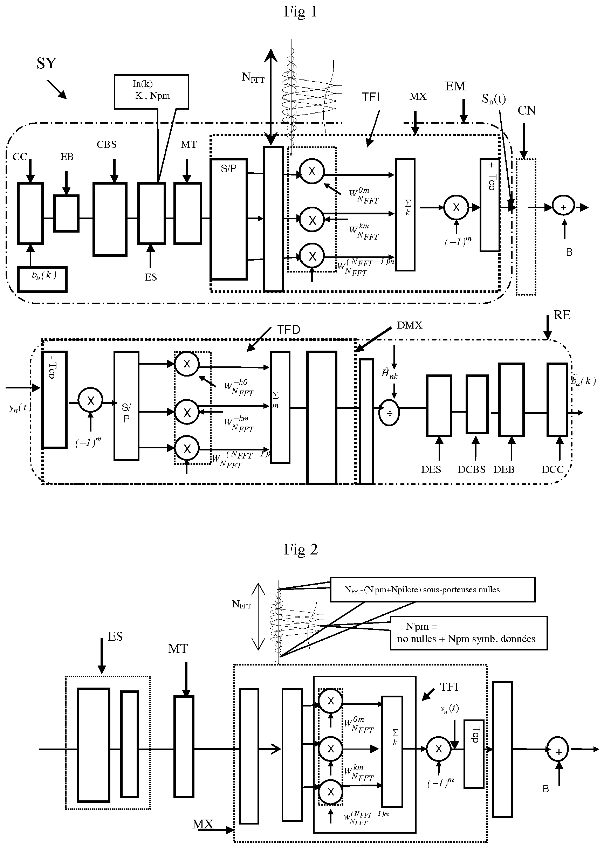

La demande de brevet français "Procédé et dispositif d'entrelacement dynamique" FR0 05 537 63 déposée le 7 décembre 2005, propose une amélioration aux algorithmes d'entrelacement statique. Le brevet propose une loi d'entrelacement bloc de taille K, variable dans le temps, appliquée sur les porteuses d'un multiplex OFDM. Une mise en oeuvre du procédé avec un système OFDM particulier est schématisé par la figure 1. Le système SY comprend un dispositif d'émission EM et un dispositif de réception RE. Le dispositif d'émission comprend un codage de canal CC, un entrelacement binaire EB, un codage binaire à symbole CBS, un entrelaceur ES, une mise en trame MT, un modulateur OFDM MX. Le signal émis Sn(t) est transmis par le canal de transmission CN. Un bruit blanc B s'ajoute au signal transmis. Le récepteur RE comprend un démodulateur OFDM DMX, un desentrelaceur DES, un décodage binaire à symbole DCBS, un desentrelaceur binaire DEB, un décodage DCC. Dans une des configurations de mise en oeuvre, le bloc à entrelacer de taille K multiple de Npm est constitué par l'ensemble des symboles de données associées à un ou plusieurs symboles OFDM et varie tous les N symboles OFDM. NN lois d'entrelacement sont définies en fonction de la taille du bloc K multiple du nombre de symbole de données Npm par multiplex OFDM, et en fonction des paramètres optimaux de l'algorithme d'entrelacement qui spécifient les lois d'entrelacement et la dispersion entre données entrelacées.

L'entrelacement préférentiellement choisi est un entrelacement itératif à structure turbo déterminé par trois paramètres entiers K, p et q ainsi que par l'itération j de l'algorithme. Cet entrelacement à structure turbo a fait l'objet du dépôt d'une demande de brevet français publiée le 07.07.2006 sous le n° 2880483. Cet entrelacement à structure turbo est tel qu'une modification des paramètres ou de l'itération de l'algorithme permet de modifier le motif d'entrelacement ainsi que la dispersion définie par :

$$\Delta_{eff} I_{p,q}^{(j)}(s).$$

On définit la dispersion comme étant la plus petite distance après entrelacement, entre deux indices de position des données d'entrée, séparées en sortie du module d'entrelacement par s-1 données.. La dispersion est donnée par la relation $\Delta I_{eff}(s) = Min_{k,k \in S} |I(k+s) - I(k)|$. La fonction $|X|$ fournit la valeur absolue de X. Le choix des lois d'entrelacement est effectué en fonction d'une valeur minimale imposée de la dispersion ; une loi d'entrelacement choisie permet d'obtenir une dispersion supérieure à ce minimum.

Pour une configuration particulière de mise en oeuvre illustrée par la figure 2, le procédé d'entrelacement est effectué à l'échelle d'un symbole OFDM et intègre une portion des porteuses de garde du multiplex OFDM dans le processus d'entrelacement. La taille du bloc d'entrelacement est alors de taille N'pm où N'pm est compris entre Npm et NFFT. Npm correspond au nombre de porteuses de données par multiplex OFDM. La valeur de N'pm est la somme de Npm porteuses de données et de no porteuses de garde. no peut varier typiquement entre zéro et un nombre $n_{max}$ correspondant à environ 10% du nombre Npm de symboles de données ou correspondant typiquement à ($N_{FFT}$-Npm-Npilotes)/2 où Npilotes correspond au nombre de symboles pilotes par multiplex OFDM dédiés à l'estimation de canal, à un dispositif de synchronisation ou de signalisation. Cette limite $n_{max}$ est fixée empiriquement.

Ce procédé permet de blanchir la perturbation fréquentielle introduite par le support de transmission via la propriété dynamique de l'entrelacement appliqué sur les symboles de données avant multiplexage des symboles sur le multiplex OFDM. La prise en compte de no porteuses nulles dans le processus d'entrelacement dynamique permet d'améliorer les performances globales du système de transmission car elle introduit une sélectivité fréquentielle accrue du support de transmission combinée à une vitesse de variation plus importante via la modification de la loi d'entrelacement $I_n(k)$ tous les N symboles OFDM. Cette vitesse de variation supplémentaire fictive n'introduit pas une dispersion Doppler supplémentaire. De surcroît, elle réduit la perte d'orthogonalité entre sous-porteuses, en insérant une porteuse nulle entre deux porteuses de données, on augmente l'écart interporteuse entre deux porteuses de données adjacentes sans réduire l'efficacité spectrale totale du système.

Toutefois, la diversité de position des porteuses introduite par cet entrelacement dynamique avec insertion de porteuses nulles ne suffit pas pour éliminer les porteuses fortement bruitées ou affectées d'un signal parasite lors de la transmission. Les porteuses nulles sont multiplexées dans le multiplex via la loi de permutation et non via une estimation du bruit sur chaque sous-porteuse du multiplex.

Aussi, le problème technique à résoudre par l'objet de la présente invention est de proposer un procédé d'entrelacement fréquentiel plus efficace que les procédés connus pour un dispositif d'émission comprenant un module de multiplexage et de modulation par des fonctions orthogonales dit multiplex orthogonal, en particulier un multiplex OFDM, pour éliminer les porteuses fortement bruitées ou affectées d'un signal parasite lors de la transmission par le canal.

Pour répondre à ce problème, la présente invention a pour objet un procédé selon la revendication 1, un entrelaceur selon la revendication 7, un dispositif d'émission selon la revendication 8 ainsi qu'un système selon la revendication 9.

Les revendications dépendantes définissent des modes de réalisation.

On décrit un procédé mixte d'entrelacement de symboles destinés à être affectés à des porteuses d'un dispositif d'émission multi porteuses comprenant un module de multiplexage et de modulation par $N_{FFT}$ fonctions orthogonales, le dispositif d'émission mettant en oeuvre un ensemble de porteuses formé de porteuses de données et de porteuses nulles, comprenant les étapes qui consistent :

-  à sélectionner de manière variable dans le temps, parmi l'ensemble des porteuses, Npm porteuses dédiées à transmettre des symboles de données, en fonction d'une estimation d'une fonction de transfert d'un canal de transmission d'un signal émis correspondant aux symboles orthogonaux modulés générés à partir des symboles de données par le module de multiplexage et de modulation,
-  à insérer, à des positions déterminées en fonction de l'estimation d'une fonction de transfert du support de transmission, no porteuses nulles au sein de la sélection précédente pour former un bloc de N'pm porteuses dédiées à transmettre un bloc de symboles,

- à entrelacer dynamiquement un bloc de porteuses comprenant les Npm porteuses de données.

En outre, on décrit un entrelaceur mixte de symboles destinés à être affectés à des porteuses d'un dispositif d'émission multi porteuses comprenant un module de multiplexage et de modulation par $N_{FFT}$ fonctions orthogonales, le dispositif d'entrelacement mettant en oeuvre un ensemble de porteuses formé de porteuses de données et de porteuses nulles, comprenant :

- un moyen de sélection de manière variable dans le temps, parmi l'ensemble des porteuses, de Npm porteuses dédiées à transmettre des symboles de données, en fonction d'une estimation d'une fonction de transfert d'un canal de transmission d'un signal émis correspondant aux symboles orthogonaux modulés générés à partir des symboles de données par le module de multiplexage et de modulation,
- un moyen pour insérer, à des positions déterminées en fonction de l'estimation d'une fonction de transfert, no porteuses nulles au sein de la sélection précédente pour former un bloc de N'pm porteuses dédiées à transmettre un bloc de symboles,
- un moyen pour entrelacer dynamiquement un bloc de porteuses comprenant les Npm porteuses de données.

En outre, on décrit un système comprenant un dispositif d'émission et un dispositif de réception. Le dispositif d'émission comprend un entrelaceur fréquentiel selon un objet précédent. Le dispositif de réception comprend un module de démultiplexage et de démodulation par $N_{FFT}$ fonctions orthogonales de symboles apte à démoduler un symbole estimateur dont la partie réelle est égale à 1 et la partie imaginaire à 0 pour estimer une fonction de transfert d'un canal de transmission et un desentrelaceur effectuant un desentrelacement de symboles démodulés selon une loi inverse à une loi d'entrelacement mise en oeuvre par le dispositif d'émission, le desentrelaceur étant apte à calculer à des instants déterminés la loi de desentrelacement, la loi d'entrelacement variant avec le temps pour un mode de transmission donné.

L'entrelacement mixte exploite une fraction des porteuses de garde placée aux extrémités du multiplex OFDM pour éliminer certaines porteuses dans la bande utile du multiplex OFDM et les remplacer par des porteuses de garde nulles. Selon un mode préféré, des porteuses de garde sont modifiées en porteuses de données afin de ne pas dégrader l'efficacité spectrale totale du système. La position des porteuses nulles dans la bande utile du multiplex OFDM tient compte d'une estimation préalable des gains complexes de la fonction de transfert du canal sur ces porteuses contrairement aux procédés connus.

Ainsi, un entrelacement mixte qui sélectionne des sous-porteuses destinées à transmettre les symboles de données sur un multiplex OFDM et qui remplace des sous-porteuses fortement bruitées en réception par des porteuses nulles, permet d'améliorer les performances des circuits de décision en réception. Ces porteuses peuvent être positionnées dans le multiplex OFDM lors de la mise en trame MT des données.

L'entrelacement dynamique effectué qui consiste à utiliser une loi d'entrelacement différente au cours du temps appliquée sur les symboles de données, pour un mode de transmission donné, permet de générer une variabilité temporelle fictive du canal de transmission qui lui confère des propriétés statistiques tendant vers un bruit gaussien. Ceci permet de réduire la corrélation temporelle qui affecte un système de transmission dans lequel les symboles de données sont multiplexés puis modulés, en particulier un système OFDM, et par conséquent d'améliorer la prise de décision en réception.

Un tel entrelacement peut, en outre, de manière particulièrement avantageuse, permettre d'accentuer la modification conjointe de la bande de cohérence, qui se rapporte au domaine fréquentiel du multiplex orthogonal, la bande de cohérence du canal correspondant à la valeur moyenne de l'écart fréquentiel nécessaire pour assurer une décorrélation de deux composantes fréquentielles de la fonction de transfert du canal de transmission, et de la longueur de cohérence, qui se rapporte au domaine temporel ou spatial, du canal de transmission ainsi que de réduire l'impact des étages RF. A cette fin en particulier, le procédé effectue un entrelacement bloc dynamique d'un bloc composé des symboles de données destinés à un multiplex orthogonal et de symboles nuls préalablement insérés aux extrémités du bloc, tout en ayant éliminé le multiplexage de ces porteuses sur les porteuses fortement bruitées mises à zéro lors de la mise en trame MT. Ceci a notamment pour effet d'introduire des symboles nuls dans la bande passante du multiplex orthogonal, multiplex orthogonal typiquement OFDM, à des positions variables dans le temps du fait de l'entrelacement dynamique.

Selon un mode particulier de réalisation, la modification conjointe est obtenue au moyen d'un algorithme d'entrelacement itératif appliqué sur les symboles nuls et les symboles de données, avec une loi d'entrelacement qui varie par exemple suivant l'itération considérée. Cet algorithme a fait l'objet d'une demande de brevet français N° FR0 04 141 13. Typiquement, après N symboles orthogonaux modulés, l'algorithme utilise une loi d'entrelacement différente par le nombre d'itérations ou par les paramètres de l'entrelacement, suivant les contraintes et optimisations globales du système de transmission.

Une loi d'entrelacement I(k) d'un bloc de taille K est une fonction bijective qui donne l'ordre suivant lequel doit être lue, en sortie, une séquence d'entrée formée par K données indicées par un indice k variant de 0 à K-1. Soit $X(k)$

EP 1 977 578 B1

une séquence en entrée d'un entrelaceur de loi d'entrelacement I(k). Soit *Y(k)* la séquence en sortie de l'entrelaceur. Alors *Y(k) = X(I(k))* : la kième donnée de la séquence entrelacée ayant l'indice de position k-1 correspond à la donnée d'indice I(k-1) de la séquence d'entrée X(0),...,X(K-1). Les données d'entrée à entrelacer et les données entrelacées de sortie sont représentées dans la suite du document uniquement par leur indice k, sauf indication contraire

L'entrelacement dynamique est effectué sur un bloc de N'pm symboles constitué par des symboles de données non nuls et des symboles nuls, ce bloc correspondant au niveau du multiplex orthogonal à N'pm sous-porteuses d'un symbole orthogonal modulé, symbole typiquement OFDM. N'pm est compris entre Npm, nombre de porteuses de données et $N_{FFT}$, taille du multiplex orthogonal. Ces N'pm symboles sont affectés à des porteuses d'un groupe formé par les porteuses de données d'un symbole orthogonal modulé, typiquement OFDM, et par une portion de porteuses nulles localisées aux extrémités du spectre du symbole orthogonal modulé, typiquement OFDM.

Selon un mode de réalisation particulier, la variation temporelle de la loi d'entrelacement dépend d'un indice temporel des symboles du multiplex orthogonal. Ces symboles possèdent un indice associé à la position des porteuses dans le multiplex orthogonal et un indice associé à l'instant d'émission d'un signal orthogonal dans un motif temporel. Ce signal est dans la suite du document désigné par le terme symbole orthogonal modulé. En particulier, la loi d'entrelacement peut varier après modulation d'un bloc de N symboles orthogonaux modulés, typiquement N symboles OFDM, N étant un paramètre déterminé typiquement en fonction des propriétés du canal de transmission et du tramage des données, $N \geq 1$. Selon un autre mode de réalisation particulier, l'entrelacement porte sur un bloc de M symboles et la variation temporelle de la loi d'entrelacement intervient après entrelacement du bloc de M symboles. Plus particulièrement, M est un multiple du nombre de porteuses N'pm du multiplex orthogonal, N'pm $\leq N_{FFT}$, et un sous-multiple de N.

L'insertion de porteuses nulles renforce l'effet de modification des propriétés du canal de transmission obtenu par l'entrelacement dynamique, en translatant, à des positions variables, ces porteuses nulles dans la bande passante du système.

Une optimisation de la position de ces porteuses vis-à-vis de l'entrelacement fréquentiel dynamique mis en jeu permet de combiner une technique de diversité par sélection et un entrelacement dynamique. L'efficacité spectrale totale du système, c'est-à-dire le rapport entre le débit utile et la bande totale du système, n'est pas modifiée puisque le procédé exploite les porteuses nulles localisées aux bords du spectre. Ainsi, contrairement aux dispositifs d'entrelacement connus qui, compte tenu de leur faible efficacité vis-à-vis des variations Doppler, sont de fait appliqués sur les données utiles à transmettre et non sur des données dédiées à la signalisation, à l'estimation du canal de transmission ou à la synchronisation, un procédé selon l'invention peut exploiter des données non utiles, une partie des porteuses nulles d'un multiplex orthogonal.

L'intégration de porteuses nulles dans la bande passante du système à des positions déterminées et variables dans le temps améliore la décorrélation des porteuses et réduit la perte d'orthogonalité des porteuses en particulier dans le cas où le canal de transmission est dispersif, en particulier en accroissant l'écart inter porteuses au voisinage d'une porteuse nulle dans le multiplex orthogonal. Un tel procédé permet d'éliminer des porteuses affectés d'un signal parasite ou bien fortement bruitées et modifier les propriétés du canal de transmission dans les domaines temporel et fréquentiel et de réduire conjointement la corrélation fréquentielle et la corrélation temporelle qui affecte un système, en particulier de type OFDM. Ce procédé s'avère particulièrement intéressant pour des systèmes à courte portée délivrant des débits élevés et nécessitant de fait des profondeurs d'entrelacement faibles effectués en amont de l'invention. C'est le cas des systèmes Ultra Large Bande, tels que le système défini par le groupe de travail 802.15.3a TG constitué par l'alliance MBOA, dont les références sont "Physical Layer Submission to 802.15 Task Group 3a : Multi-Band Orthogonal Frequency Division Multiplexing", MBOA website, September 14, 2004, des systèmes définis en bande millimétrique (large bande et ultra large bande) ou bien des systèmes de type Boucle Locale Radio comme défini dans la norme IEEE Std 802.16-2004, IEEE Standard for Local and metropolitan area networks, Part 16: Air Interface for Fixed Broadband Wireless Access Systems, October 2004. Le procédé s'avère en outre pertinent pour des systèmes affectés d'une forte dispersion Doppler. L'introduction de porteuses nulles à des positions variables dans le temps permet de réduire la perte d'orthogonalité entre porteuses tout en assurant un blanchiement de la perturbation générée par le canal de transmission sur le signal de communication. Typiquement, le nombre de symboles nuls ajoutés lors de l'entrelacement fréquentiel est ajusté suivant une connaissance à priori des propriétés de corrélation du canal de transmission et du nombre de porteuses nulles classiquement ajoutées lors d'une modulation OFDM.

Le fait que les symboles ajoutés soient nuls permet de ne pas introduire de bruit supplémentaire.

Selon un mode de réalisation, l'estimation d'une fonction de transfert d'un canal de transmission est obtenue au moyen d'un symbole orthogonal modulé estimateur. Il est issu d'une modulation par un nombre N"pm de porteuses compris entre Npm et $N_{FFT}$, où Npm désigne le nombre initial de porteuses non nulles du dispositif d'émission. Les N"pm symboles de données du symbole orthogonal modulé estimateur ont la partie réelle égale à 1 et la partie imaginaire à 0. Ainsi selon ce mode, le procédé insert périodiquement un symbole OFDM estimateur dans une structure de trame formée par NN0 symboles OFDM dont le premier symbole OFDM est le dit symbole OFDM estimateur et les NN0-1 symboles OFDM suivants sont destinés à transmettre l'information. Le multiplex OFDM estimateur correspondant est composé par N"pm symboles dont la partie réelle est égale à l'unité et la partie imaginaire égale à zéro. Le symbole OFDM estimateur est utilisé pour estimer les gains complexes de la fonction de transfert du canal sur la durée de la trame. Cette estimation permet de procéder à la sélection de Npm porteuses allouées à la transmission des symboles de données dans le multiplex OFDM, avant entrelacement d'une sélection des symboles. N"pm est fixé empiriquement et compris entre N'pm=Npm+no+Npilotes et $N_{FFT}$, la taille de la transformée de Fourier du modem multiporteuse, avec no le nombre de porteuses nulles insérées avant entrelacement.

La sélection variable dans le temps des porteuses allouées à la transmission des symboles de données et le positionnement des no porteuses nulles dans le multiplex OFDM utilisent un seuil de décision S' appliqué sur les gains complexes de la fonction de transfert bruitée du canal de propagation déduite de la démodulation OFDM du symbole estimateur. Ce seuil S'est compris entre la moyenne harmonique So et la moyenne arithmétique SI de la moyenne harmonique glissante MH du module au carré des gains complexes de la fonction de transfert du canal. Les gains complexes de la fonction de transfert du canal sont déterminés à partir des symboles $H_{n',k}^{estim}$ reçus correspondant au multiplex OFDM estimateur. Chaque composante k d'un symbole reçu $H_{n',k}^{estim}$ est composé d'une composante k du gain complexe $H_{n',k}$ de la fonction de transfert du canal de transmission et d'une composante k d'un bruit Gaussien $B_{n',k}$, où n'Ts désigne l'instant d'émission du symbole estimateur, tel que $H_{n',k}^{estim} = H_{n',k} + B_{n',k}$. Le seuil S'est ajusté pour que Npm sous-porteuses aient une puissance supérieure à ce seuil parmi N'pm sous-porteuses et que no sous-porteuses soient sélectionnées avec une puissance inférieure à ce seuil. La moyenne harmonique est égale à l'inverse de la moyenne arithmétique des inverses des observations. La moyenne harmonique glissante estimée sur le module au carré des gains complexes du symbole estimateur est donnée par l'équation suivante :

$$\frac{1}{MH(n',k_0)} = \frac{1}{n_0} \sum_{k=0}^{k=n0-1} \frac{1}{\left|H_{n',k+ko} + B_{n',k+k0}\right|^2} \qquad (4)$$

La moyenne harmonique est calculée pour N'pm échantillons sur une fenêtre d'observation comprenant n0 échantillons. Pour les no derniers échantillons de la fonction de transfert bruitée du symbole estimateur, la moyenne glissante est calculée sur une fenêtre d'observation variable ayant un incrément négatif d'un pas de -1 à partir d'une valeur initiale égale à $n_0$.

Selon un mode de réalisation préféré avec optimisation de l'entrelacement, la sélection dynamique des porteuses allouées à la transmission des données et le positionnement dynamique des porteuses nulles sont effectués en coopération avec une sélection d'une loi d'entrelacement pour générer un entrelacement fréquentiel dynamique des symboles d'un multiplex orthogonal de taille N'pm de manière à ce que la dispersion entre sous-porteuses soit optimale vis-à-vis du système de transmission. Pour une taille d'entrelacement spécifiée de taille N'pm intégrant Npm porteuses de données et no porteuses nulles, NN' lois d'entrelacement sont générées vis-à-vis de l'algorithme d'entrelacement mis en oeuvre avec comme contrainte une dispersion cible entre deux porteuses adjacentes ou deux porteuses séparées par s-1 sous-porteuses. Parmi les NN' lois précédentes, le procédé sélectionne NN lois de la manière suivante. Pour chaque loi prise parmi les NN' lois, le procédé procède à un désentrelacement de taille N'pm des gains complexes de la fonction de transfert bruitée du symbole estimateur en sortie du démodulateur OFDM du symbole estimateur. Le seuil S'est ensuite comparé à la répartition des modules au carré des gains complexes désentrelacés du symbole estimateur. Les échantillons pour lesquels les modules au carré des gains complexes sont inférieurs au seuil et localisés dans le spectre déterminent l'emplacement des porteuses mises à zéro dans le bloc entrelacé. La distance minimale entre porteuses nulles est calculée sur ce signal. La loi d'entrelacement est sélectionnée si elle permet d'assurer une dispersion entre porteuses nulles du symbole estimateur, après désentrelacement, supérieure au rapport Npm/no. On met en oeuvre les NN lois d'entrelacement fréquentielles après insertion de porteuses nulles aux positions données par l'algorithme de positionnement des porteuses nulles sur N'pm symboles du multiplex OFDM. L'insertion et le positionnement de porteuses nulles dans le multiplex orthogonal repose sur un seuil de décision et un algorithme d'entrelacement qui positionnent de façon optimale ces porteuses de garde dans la partie utile du multiplex vis-à-vis de l'égalisation multiporteuse en réception. L'optimisation de l'opération d'entrelacement sur les symboles d'un multiplex orthogonal est préalablement réalisée via la sélection de NN' lois d'entrelacement ayant une dispersion cible entre deux porteuses adjacentes ou deux porteuses séparées par s-1 sous-porteuses. Le nombre de lois NN mises en oeuvre à l'émission est sous multiple de NN0-1.

D'autres caractéristiques et avantages de l'invention apparaîtront lors de la description qui suit faite en regard de figures annexées données à titre d'exemples non limitatifs.

Les figures 1 et 2 sont des schémas illustrant un procédé d'entrelacement selon l'art antérieur.

La figure 3 est un organigramme d'un procédé selon l'invention.

La figure 4 un schéma d'un exemple d'un système de transmission mettant en oeuvre un procédé d'entrelacement mixte.

La figure 5 est un schéma de principe d'un dispositif d'entrelacement mettant en oeuvre un algorithme d'entrelacement itératif permettant d'obtenir une loi d'entrelacement variable dans le temps pour un procédé selon l'invention.

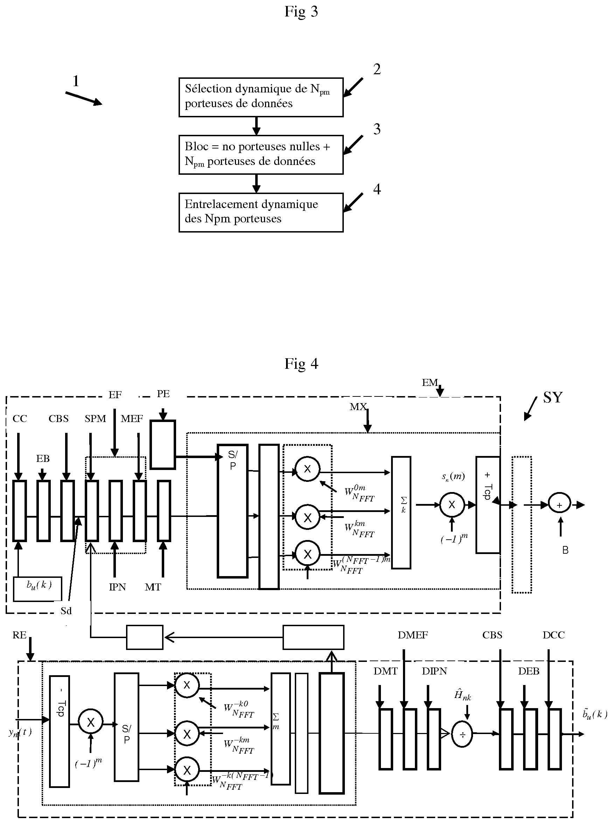

La figure 3 est un organigramme d'un procédé mixte d'entrelacement de symboles. Les symboles sont destinés à être affectés à des porteuses d'un dispositif d'émission multi porteuses comprenant un module de multiplexage et de modulation par $N_{FFT}$ fonctions orthogonales. Le dispositif met en oeuvre un ensemble de porteuses formé de porteuses de données et de porteuses nulles.

Dans une première étape, le procédé 1 sélectionne 2 de manière variable dans le temps, parmi l'ensemble des porteuses, Npm porteuses dédiées à transmettre des symboles de données, en fonction d'une estimation d'une fonction de transfert d'un canal de transmission d'un signal émis correspondant aux symboles orthogonaux modulés générés à partir des symboles de données par le module de multiplexage et de modulation.

Dans une deuxième étape, le procédé insère 3 à des positions déterminées en fonction de l'estimation d'une fonction de transfert, no porteuses nulles au sein de la sélection précédente pour former un bloc de N'pm porteuses dédiées à transmettre un bloc de symboles.

Dans une troisième étape, le procédé entrelace 4 dynamiquement un bloc de porteuses comprenant les Npm porteuses de données.

La figure 4 est un schéma d'un exemple d'un système SY de transmission mettant en oeuvre un procédé d'entrelacement selon l'invention. Le système de transmission comprend un dispositif EM d'émission multi porteuses et un dispositif RE de réception. Le dispositif EM d'émission comprend un module SC de génération de données sources, un module CC de codage canal, un module EB d'entrelacement binaire, un module CBS de codage binaire à symbole, un entrelaceur fréquentiel EF, un dispositif de mise en trame MT, un module de génération d'un symbole estimateur SE, un modulateur OFDM MX.

L'entrelaceur fréquentiel EF se compose d'un module SPM de sélection des porteuses dédiées à la transmission, d'un module IPN qui insère les porteuses nulles à une position déterminée, un module d'entrelacement MEF fréquentiel.

Le module MEF d'entrelacement fréquentiel de symboles comprend en particulier un dispositif de calcul de la loi d'entrelacement tel que la loi d'entrelacement bloc calculée est variable dans le temps pour un mode de transmission donné du dispositif EM d'émission multi porteuses.

Le dispositif de mise en trame MT répartit les symboles de données et les symboles pilotes dans un multiplex du modulateur OFDM MX.

Le module de génération d'un symbole estimateur SE génère N"pm symboles de données pour composer un symbole OFDM estimateur inséré périodiquement dans une structure de trame formée de NN0 symboles OFDM. Les N"pm symboles de données ont la partie réelle égale à un et la partie imaginaire égale à zéro.

Le modulateur OFDM MX comprend un multiplex. Le modulateur comprend $N_{FFT}$ porteuses, $Npm \leq N_{FFT}$.

Le dispositif RE de réception comprend un démodulateur OFDM comprenant un démultiplexeur, un module de desentrelacement DMEF et un module DIPN d'élimination des porteuses nulles. Le module de desentrelacement DMEF effectue un desentrelacement de symboles démodulés selon une loi inverse à une loi d'entrelacement. Ce module de desentrelacement est apte à calculer à des instants déterminés la loi de desentrelacement qui varie avec le temps pour un mode de transmission donné. Le module DIPN élimine les porteuses nulles insérées à l'émission par le module IPN.

Un procédé 1 d'entrelacement selon l'invention est mis en oeuvre par l'entrelaceur EF fréquentiel du dispositif EM d'émission. Il s'applique sur les symboles de données Sd issus du codage binaire à symbole CBS.

Le procédé selon l'invention sélectionne Npm symboles de données Sd contigus en bande de base, constitués par m bits codés convertis sous la forme de signaux complexes, en fonction d'une estimation d'une fonction de transfert du canal de transmission. Dans chaque bloc de Npm symboles, la position des symboles est indicée par l'entier k variant de 0 à N'pm-1 et correspond à l'indice des porteuses.

Le procédé selon l'invention applique une loi d'entrelacement $I_n(k)$ sur chaque bloc de Npm symboles. La loi d'entrelacement $I_n(k)$ est de taille Npm et d'indice temporel n variant de 1 à NN, où NN correspond au nombre de lois d'entrelacement différentes mises en oeuvre par le procédé. Cette loi varie temporellement, par exemple tous les N symboles OFDM.

Le procédé insert no symboles nuls parmi les Npm symboles de données entrelacés suivant une répartition donnée pour former un bloc constitué par N'pm symboles. no peut varier typiquement entre zéro et un nombre $n_{max}$ correspondant à environ 10% du nombre Npm de symboles de données ou correspondant typiquement à (NFFT-Npm-Npilotes)/2, où Npilotes correspond au nombre de symboles pilotes par multiplex OFDM dédiés à l'estimation de canal, à un dispositif de synchronisation ou de signalisation. Cette limite $n_{max}$ est fixée empiriquement. Le positionnement des no symboles nuls est fait en fonction d'une estimation d'une fonction de transfert du canal de transmission ; les no symboles nuls sont positionnés pour mettre à zéro les porteuses fortement bruitées.

Les N'pm symboles sont mis en trame.

Conformément à la génération classique d'un signal OFDM en temps, réalisée au moyen d'une transformée de Fourier inverse de taille $N_{FFT}$, des symboles pilotes sont optionnellement ajoutés lors de la mise en trame et n1 symboles nuls sont insérés de façon symétrique aux extrémités d'un multiplex constitué par les N'pm+ Npilotes branches pour former un multiplex OFDM à $N_{FFT}$ branches, $N'pm \le N_{FFT}$.

Chaque porteuse fk d'indice k du multiplex OFDM module un symbole de la branche k à l'aide de la composante de Fourier :

$$w_{N_{FFT}}^{km} = exp(\ j2\pi \frac{km}{N_{FFT}}\ )$$

où k varie de 0 à $N_{FFT}$-1, sous réserve que les échantillons soient alternativement multipliés par $(-1)^m$ en sortie de la transformée de Fourier inverse, et où m correspond à l'indice de l'échantillon en sortie du multiplex OFDM Mx.

Le nombre n1 de symboles nuls ajoutés aux extrémités du multiplex après mise en trame dépend de la taille $N_{FFT}$ de la Transformée de Fourier Inverse, TFI, de la taille d'un groupe de symboles de données, Npm, du nombre de symboles nuls no ajoutés pour former un bloc de taille N'pm symboles et du nombre de symboles pilotes Npilotes ajoutés lors de la mise en trame, nl= $N_{FFT}$ - N'pm-Npilotes = $N_{FFT}$ -(Npm+no)-Npilotes. Le nombre de porteuses dites nulles auxquelles sont destinées un symbole nul est donc égal à no plus n1.

Selon une variante du procédé, une partie no' des n1 porteuses nulles est ajoutée aux Npm porteuses sélectionnées pour former un bloc de porteuses sur lequel porte l'entrelacement dynamique.

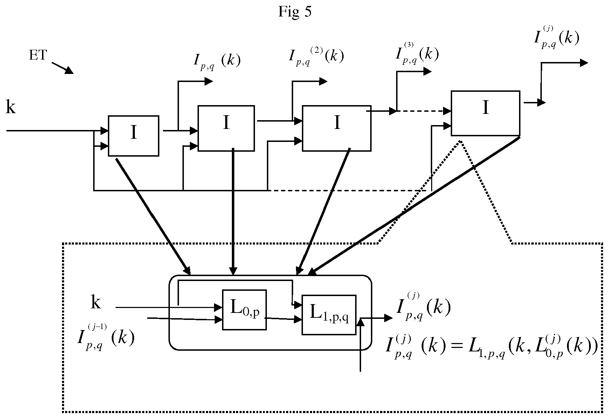

La figure 5 donne un schéma de principe d'un dispositif d'entrelacement ET mettant en oeuvre un algorithme d'entrelacement itératif permettant d'obtenir une loi d'entrelacement variable dans le temps. Le dispositif d'entrelacement ET permet d'obtenir des lois d'entrelacement variables dans le temps en modifiant les paramètres de l'algorithme et/ou le nombre d'itérations de l'algorithme, pour un procédé d'entrelacement selon l'invention.

Le dispositif ET d'entrelacement mettant en oeuvre l'algorithme comprend autant de cellules de base I que d'itérations. La sortie de la jième cellule de base I, I$_j$, qui correspond à la jième itération, fournit un motif d'entrelacement qui s'exprime sous la forme :

$$I_{p,q}^{(j)}\ (k)$$

où p et q sont deux paramètres entiers décrivant la fonction de base I et j l'itération associée à I. La mise en oeuvre de l'algorithme permet d'effectuer un entrelacement bloc de taille K à J itérations d'indice j, J étant supérieur ou égal à 1, de données numériques d'entrée indicées par une variable k = {0, ...., K -1}.

Chaque cellule de base I du dispositif ET d'entrelacement présente la même structure : deux entrées, une sortie et deux cellules élémentaires, notées L$_{0,p}$ et L$_{1,p,q}$. Les entiers p et q sont deux paramètres de la loi d'entrelacement qui permettent de générer la loi désirée. Chaque cellule élémentaire L$_{0,p}$ et L$_{1,p,q}$ comportent deux entrées et une sortie. Une des deux entrées des deux cellules L$_{0,p}$ et L$_{1,p,q}$ est identique pour ces deux fonctions et correspond à la variation d'indice des échantillons avant entrelacement. Les deux entrées de la cellule élémentaire L$_{0,p}$ correspondent aux deux entrées de la cellule de base I à laquelle elle appartient, la sortie de la cellule élémentaire L$_{1,p,q}$ correspond à la sortie de la cellule de base I à laquelle elle appartient. La sortie de la cellule élémentaire L$_{0,p}$ est reliée à une première entrée de la cellule élémentaire L$_{1,p,q}$. La seconde entrée de la cellule élémentaire L$_{1,p,q}$ est reliée à une première entrée de la cellule de base I à laquelle elle appartient; cette entrée de la cellule de base I étant alimentée par les indices k à entrelacer qui se présentent généralement sous la forme d'une rampe de 0 à K-1. La seconde entrée de la cellule de base I est reliée à la sortie de la cellule de base I précédente, sauf pour la première cellule de base, pour laquelle les deux entrées sont reliées entre elles et correspondent à l'indice k.

L'algorithme d'entrelacement $I_{p,q}^{(j)}\ (k)$ repose ainsi sur une structure itérative pour laquelle la loi d'entrelacement dépend de trois paramètres (K, p, q) et de l'itération considérée j. K correspond à la taille du bloc à entrelacer, p et q sont deux paramètres qui modifient les propriétés du dispositif d'entrelacement, notamment la loi d'entrelacement et la dispersion notée $\Delta_{eff} I_{p,q}^{(j)}( s )$. La dispersion correspond à la distance minimale après entrelacement des indices de position des données d'entrée séparées par s-1 données. Le choix de l'itération permet de modifier la loi d'entrelacement et la dispersion tout en conservant un motif de taille p. La variation dans le temps de la loi d'entrelacement est obtenue en modifiant soit l'itération, soit un des paramètres p et q du dispositif d'entrelacement suivant un critère d'optimisation de la loi ou bien d'une contrainte associée au système de transmission.

Cet entrelacement qui repose sur la combinaison de deux fonctions algébriques $L_{0,p}$ et $L_{1,p,q}$ à structure 'turbo', a la propriété de préserver un motif, c'est-à-dire de conserver l'ordre de multiplexage de p flux de données après entrelacement, p étant un paramètre de l'algorithme d'entrelacement sous multiple de la taille K de l'entrelacement bloc, q est un paramètre entier qui permet de faire varier la loi d'entrelacement et la dispersion. Selon un mode de réalisation typique, q est fixé arbitrairement à deux pour des raisons de simplicité et p fixe la taille du motif.

Cette propriété de préservation d'un motif s'avère très intéressante pour préserver des opérations d'optimisation reposant sur un multiplexage de p données réalisées en amont ou en aval de l'opération d'entrelacement.

La loi d'entrelacement $I_{p,q}^{(j)}(k)$ donnée par la sortie du module d'entrelacement I pour l'itération (j), résulte de la combinaison de deux fonctions algébriques à deux entrées et une sortie $L_{0,p}$ et $L_{1,p,q}$ décrites ci-après :

$$L_{0,p}(k,k1) = \left[ -k - k_1 \cdot p \right]_K \quad k = \{0,....,K-1\}$$
$$L_{1,p,q}(k,k_2) = \left[ K - p + k + q \cdot p \cdot k_2 \right]_K, k = \{0,....,K-1\} \tag{5}$$
$$I_{p,q}(k,k1) = L_{1,p,q}(k, L_{0,p}(k,k1))$$

Pour l'itération j=1, les entrées k et k1 de la fonction $L_{0,p}$ sont identiques et correspondent aux indices de position des données à l'entrée du procédé d'entrelacement. Il en résulte les expressions suivantes pour un motif de taille p et un paramètre q :

$$L_{0,p}(k,k) = \left[ -k - p \cdot k \right]_K$$
$$I_{p,q}(k) = L_{1,p,q}(k, L_{0,p}(k)) = \left[ K - p + k + q \cdot p \cdot L_{0,p}(k,k) \right]_K \quad k = \{0,....,K-1\} \quad \mathbf{(6)}$$
$$I_{p,q}(k) = \left[ K - p + k + q \cdot p \cdot \left[ -k - p \cdot k \right]_K \right]_K \quad k = \{0,....,K-1\}$$

Les sorties des fonctions algébriques $L_{0,p}$ et $L_{1,p,q}$ pour l'itération (j) sont données respectivement par les lois $L_{0,p}^{(j)}(k,k_1)$ et $L_{1,p,q}^{(j)}(k,k_2)$ pour lesquelles les variables k1 et $k_2$ sont alimentées respectivement par la loi d'entrelacement de l'itération précédente $I_{p,q}^{(j-1)}(k)$ et la sortie de la fonction $L_{0,p}$ pour l'itération en cours (j),

Pour l'itération j, le bloc d'équations (2) est de la forme :

$$L_{0,p}^{(j)}(k) = \left[ -k - p \cdot I_{p,q}^{(j-1)}(k) \right]_K k = \{0,....,K-1\}$$
$$I_{p,q}^{(j)}(k) = L_{1,p,q}(k, I_{0,p}^{(j)}(k)) = \left[ K - p + k + q \cdot p \cdot I_{0,p}^{(j)}(k) \right]_K k = \{0,....,K-1\} \tag{7}$$
$$I_{p,q}^{(j)}(k) = \left[ K - p + k + q \cdot p \cdot \left[ -k - p \cdot I_{p,q}^{(j-1)}(k) \right]_K \right]_K \quad k = \{0,....,K-1\}$$

La séquence des données de sortie entrelacées Y(k) est reliée à la séquence des données d'entrée avant entrelacement X(k) par la relation :

$$Y(k) = X(I_{p,q}^{(j)}(k)).$$

La structure pseudo périodique et algébrique de l'algorithme permet de pré-calculer la dispersion $\underset{0 \le k \le K-1}{Min} \left| I_{p,q}^{(j)}(k+s) - I_{p,q}^{(j)}(k) \right|$ entre données séparées par s-1 données.

La dispersion correspond à la distance minimale entre les indices de position des données séparées par s-1 données de la séquence d'entrée après entrelacement.

La dispersion $\Delta_{eff} I_{p,q}^{(j)}(s)$ pour l'itération (j) de la loi d'entrelacement $I_{p,q}^{(j)}(k)$ est déterminée à partir d'un polynôme $P_{j,p,q,s}(k)$ :

$$P_{j,p,q,s}(k) = I_{p,q}^{(j)}(k+s) - I_{p,q}^{(j)}(k) = s - \left[ q \cdot p \cdot (s + p \cdot P_{j-1,p,q,s}(k)) \right]_K$$

$$\Delta_{eff} I_{p,q}^{(j)}(s) = Min_k \left\{ \left| P_{j,p,q,s}(k) \right|, K - \left| P_{j,p,q,s}(k) \right| \right\} \tag{8}$$

$$\Delta_{eff} I_{p,q}^{(j)}(s) = Min_k \left\{ \left| s - \left[ q \cdot p(s + p \cdot P_{j,p,q,s}(k)) \right]_K \right|, K - \left| s - \left[ q \cdot p \cdot (s + p \cdot P_{j,p,q,s}(k)) \right]_K \right| \right\}$$

Cette fonction algébrique $P_{j,p,q,s}(k)$ dépend des paramètres p et q de l'entrelacement, où p correspond à la plus grande taille du motif préservé, q est un paramètre qui modifie la loi d'entrelacement et (j) est l'itération considérée.

Selon un mode particulier de réalisation, un procédé selon l'invention comprend un tel algorithme d'entrelacement itératif et un module MEF d'entrelacement fréquentiel de symboles selon l'invention comprend un tel dispositif ET d'entrelacement, avec une taille K correspondant au nombre Npm ou Npm+no' de symboles à entrelacer par bloc. La loi d'entrelacement varie temporellement, par exemple tous les N symboles, en modifiant soit le nombre d'itérations, soit un des paramètres p et q du dispositif ET d'entrelacement pour un mode de transmission donné. Les paramètres de l'algorithme d'entrelacement itératif sont alors indicés par un indice temporel n qui est incrémenté tous les M blocs de K symboles et dont la valeur maximale correspond au nombre de lois d'entrelacement différentes, soit NN'-1, avec N=KxM.

La loi d'entrelacement donnée par les blocs d'équations (2) et (3) est modifiée pour prendre en compte le caractère dynamique de cette loi comme suit : $p_n$, $q_n$ et $j_n$ sont les paramètres choisis pour la loi $I_n(k)$ d'indice temporel n et NN' correspond au nombre de lois considérées.

$$I_n(k) = I_{p_n,q_n}^{(j_n)}(k)$$

$$I_{p_n,q_n}^{(j_n)}(k) = \left[ K - p_n + k + q_n \cdot p_n \cdot \left[ -k - p_n \cdot I_{p_n,q_n}^{(j_n-1)}(k) \right]_K \right]_K$$

$$k = \{0,....,K-1\}$$

**Revendications**

1. Procédé (1) d'entrelacement de symboles destinés à être affectés à des porteuses d'un dispositif (EM) d'émission multi porteuses comprenant un module de multiplexage et de modulation par $N_{FFT}$ fonctions orthogonales (Mx), le dispositif d'émission mettant en oeuvre un ensemble de porteuses formé de porteuses de données et de porteuses nulles, l'entrelacement étant combiné avec une sélection de porteuses, **caractérisé en ce que** le procédé comprend les étapes qui consistent :

   - à sélectionner (2) de manière variable dans le temps, parmi l'ensemble des porteuses, Npm porteuses dédiées à transmettre des symboles de données, en fonction d'une estimation d'une fonction de transfert d'un canal de transmission d'un signal émis correspondant aux symboles orthogonaux modulés générés à partir des symboles de données par le module (Mx) de multiplexage et de modulation,
   - à insérer (3), à des positions déterminées en fonction de l'estimation d'une fonction de transfert, no porteuses nulles au sein de la sélection précédente pour former un bloc de N'pm porteuses dédiées à transmettre un bloc de symboles,
   - à entrelacer (4) dynamiquement un bloc de porteuses comprenant les Npm porteuses de données.

2. Procédé (1) d'entrelacement de symboles selon la revendication 1, dans lequel l'estimation d'une fonction de transfert d'un canal de transmission est obtenue au moyen d'un symbole orthogonal modulé estimateur généré à partir de N"pm symboles de données dont la partie réelle est égale à 1 et la partie imaginaire à 0, issu d'une modulation par un nombre N"pm de porteuses compris entre Npm et $N_{FFT}$.

**3.** Procédé (1) d'entrelacement de symboles selon la revendication précédente, dans lequel un symbole orthogonal estimateur est inséré périodiquement parmi les symboles orthogonaux générés.

**4.** Procédé (1) d'entrelacement de symboles selon l'une des revendications 2 et 3, dans lequel la sélection des porteuses de données et l'insertion à des positions déterminées des porteuses nulles sont effectuées au moyen d'un seuil de décision S' appliqué à l'estimation d'une fonction de transfert obtenue par la démodulation d'un symbole estimateur.

**5.** Procédé (1) d'entrelacement de symboles selon l'une des revendications 1 à 4, dans lequel la sélection des porteuses de données et l'insertion à des positions déterminées des porteuses nulles est effectuée conjointement avec la sélection d'une loi d'entrelacement sous contrainte d'une dispersion optimale entre porteuses.

**6.** Procédé (1) d'entrelacement de symboles selon la revendication précédente, dans lequel le bloc de porteuses à entrelacer comprend, outre les Npm porteuses de données, un nombre déterminé no' de porteuses nulles.

**7.** Entrelaceur fréquentiel pour entrelacer des symboles destinés à être affectés à des porteuses d'un dispositif d'émission multi porteuses comprenant un module de multiplexage et de modulation par $N_{FFT}$ fonctions orthogonales en combinaison avec une sélection de porteuses, l'entrelaceur mettant en oeuvre un ensemble de porteuses formé de porteuses de données et de porteuses nulles, **caractérisé en ce qu'**il comprend :

- un moyen de sélection de manière variable dans le temps, parmi l'ensemble des porteuses, de Npm porteuses dédiées à transmettre des symboles de données, en fonction d'une estimation d'une fonction de transfert d'un canal de transmission d'un signal émis correspondant aux symboles orthogonaux modulés générés à partir des symboles de données par le module de multiplexage et de modulation,
- un moyen pour insérer (3), à des positions déterminées en fonction de l'estimation d'une fonction de transfert, no porteuses nulles au sein de la sélection précédente pour former un bloc de N'pm porteuses dédiées à transmettre un bloc de symboles,
- un moyen pour entrelacer dynamiquement un bloc de porteuses comprenant les Npm porteuses de données.

**8.** Dispositif d'émission comprenant un entrelaceur fréquentiel selon la revendication précédente.

**9.** Système comprenant un dispositif d'émission selon la revendication précédente.

**10.** Système selon la revendication précédente comprenant en outre un dispositif de réception comprenant un module de démultiplexage et de démodulation par $N_{FFT}$ fonctions orthogonales de symboles apte à démoduler un symbole estimateur dont la partie réelle est égale à 1 et la partie imaginaire à 0 pour estimer une fonction de transfert d'un canal de transmission et un desentrelaceur effectuant un desentrelacement de symboles démodulés selon une loi inverse à une loi d'entrelacement mise en oeuvre lors de l'émission des symboles apte à calculer à des instants déterminés la loi de desentrelacement qui varie avec le temps pour un mode de transmission donné.

## Patentansprüche

**1.** Verfahren (1) zur Verschachtelung von Symbolen, die dazu bestimmt sind, Trägern einer Mehrträger-Sendevorrichtung (EM) zugeordnet zu sein, die ein Modul zum Multiplexen und Modulieren durch $N_{FFT}$ orthogonale Funktionen (Mx) umfasst, wobei die Sendevorrichtung eine Anordnung von Trägern einsetzt, die von Datenträgern und Nullträgern gebildet ist, wobei die Verschachtelung mit einer Auswahl von Trägern kombiniert wird, **dadurch gekennzeichnet, dass** das Verfahren die Schritte umfasst, die aus Folgendem bestehen:

- zeitlich variables Auswählen (2), aus der Anordnung der Träger, von Npm Trägern, die vorgesehen sind, Datensymbole zu übertragen, in Abhängigkeit von einer Schätzung einer Funktion zur Übermittlung eines Kanals zur Übertragung eines abgegebenen Signals, das den modulierten orthogonalen Symbolen entspricht, die anhand der Datensymbole von dem Modul (Mx) zum Multiplexen und Modulieren erzeugt werden,
- Einfügen (3), an Positionen, die in Abhängigkeit von der Schätzung einer Funktion zur Übermittlung bestimmt sind, von no Nullträgern innerhalb der vorigen Auswahl, um einen Block aus N'pm Trägern zu bilden, die vorgesehen sind, einen Block aus Symbolen zu übertragen,
- dynamisches Verschachteln (4) eines Blocks aus Trägern, der die Npm Datenträger umfasst.

2.  Verfahren (1) zur Verschachtelung von Symbolen nach Anspruch 1, wobei die Schätzung einer Funktion zur Übermittlung eines Kanals zur Übertragung mittels eines modulierten orthogonalen Schätzsymbols erhalten wird, das anhand von N"pm Datensymbolen erzeugt wird, deren reeller Teil gleich 1 und imaginärer Teil gleich 0 ist, das aus einer Modulation durch eine Anzahl N"pm von Trägern zwischen Npm und $N_{FFT}$ hervorgeht.

3.  Verfahren (1) zur Verschachtelung von Symbolen nach dem vorhergehenden Anspruch, wobei ein orthogonales Schätzsymbol periodisch zwischen die erzeugten orthogonalen Symbole eingefügt wird.

4.  Verfahren (1) zur Verschachtelung von Symbolen nach einem der Ansprüche 2 und 3, wobei die Auswahl der Datenträger und das Einfügen an bestimmten Positionen der Nullträger mittels einer Entscheidungsschwelle S' ausgeführt werden, die auf die Schätzung einer Funktion zur Übermittlung angewandt wird, die durch die Demodulation eines Schätzsymbols erhalten wird.

5.  Verfahren (1) zur Verschachtelung von Symbolen nach einem der Ansprüche 1 bis 4, wobei die Auswahl der Datenträger und das Einfügen an bestimmten Positionen der Nullträger zusammen mit der Auswahl eines Verschachtelungsgesetzes unter der Einschränkung einer optimalen Dispersion zwischen Trägern ausgeführt wird.

6.  Verfahren (1) zur Verschachtelung von Symbolen nach dem vorhergehenden Anspruch, wobei der Block von zu verschachtelnden Trägern neben den Npm Datenträgern eine bestimmte Anzahl no' von Nullträgern umfasst.

7.  Frequenzverschachteler zur Verschachtelung von Symbolen, die dazu bestimmt sind, Trägern einer Mehrträger-Sendevorrichtung zugeordnet zu sein, die ein Modul zum Multiplexen und Modulieren durch $N_{FFT}$ orthogonale Funktionen in Kombination mit einer Auswahl von Trägern umfasst, wobei der Verschachteler eine Anordnung von Trägern einsetzt, die aus Datenträgern und Nullträgern gebildet ist, **dadurch gekennzeichnet, dass** er Folgendes umfasst:

    - ein Mittel zum zeitlich variablen Auswählen, aus der Anordnung der Träger, von Npm Trägern, die vorgesehen sind, Datensymbole zu übertragen, in Abhängigkeit von einer Schätzung einer Funktion zur Übermittlung eines Kanals zur Übertragung eines abgegebenen Signals, das den modulierten orthogonalen Symbolen entspricht, die anhand der Datensymbole von dem Modul zum Multiplexen und Modulieren erzeugt werden,
    - ein Mittel, um no Nullträger innerhalb der vorigen Auswahl an Positionen einzufügen (3), die in Abhängigkeit von der Schätzung einer Funktion zur Übermittlung bestimmt sind, um einen Block aus N'pm Trägern zu bilden, die vorgesehen sind, einen Block aus Symbolen zu übertragen,
    - ein Mittel, um einen Block aus Trägern, der die Npm Datenträger umfasst, dynamisch zu verschachteln.

8.  Sendevorrichtung, umfassend einen Frequenzverschachteler nach dem vorhergehenden Anspruch.

9.  System, umfassend eine Sendevorrichtung nach dem vorhergehenden Anspruch.

10. System nach dem vorhergehenden Anspruch, ferner umfassend eine Empfangsvorrichtung, die ein Modul zum Demultiplexen und zum Demodulieren durch $N_{FFT}$ orthogonale Funktionen von Symbolen umfasst, das in der Lage ist, ein Schätzsymbol zu demodulieren, dessen reeller Teil gleich 1 und imaginärer Teil gleich 0 ist, um eine Funktion zur Übermittlung eines Kanals zur Übertragung zu schätzen, und einen Entschachteler, der eine Entschachtelung von Symbolen vornimmt, die nach einem Gesetz demoduliert sind, das umgekehrt zu einem Verschachtelungsgesetz ist, das bei der Sendung der Symbole angewandt wird, der in der Lage ist, zu bestimmten Zeitpunkten das Entschachtelungsgesetz zu berechnen, das für einen gegebenen Übertragungsmodus mit der Zeit variiert.

**Claims**

1.  Method (1) for interleaving symbols intended to be assigned to carriers of a multicarrier transmitting device (EM) comprising a module for multiplexing and modulation by $N_{FFT}$ orthogonal functions (Mx), the transmitting device implementing a set of carriers made up of data carriers and of null carriers, the interleaving being combined with a selection of carriers, **characterized in that** the method comprises the steps which consist:

- in selecting (2) in a time-varying manner, from among the set of carriers, Npm carriers dedicated to transmitting data symbols, as a function of an estimation of a transfer function of a channel for transmitting a transmitted signal corresponding to the modulated orthogonal symbols generated from the data symbols by the multiplexing and modulation module (Mx),

- in inserting (3), at positions determined as a function of the estimation of a transfer function, a number no of null carriers within the previous selection so as to form a block of N'pm carriers dedicated to transmitting a block of symbols,

- in dynamically interleaving (4) a block of carriers comprising the Npm data carriers.

2. Method (1) for interleaving symbols according to Claim 1, in which the estimation of a transfer function of a transmission channel is obtained by means of an estimator modulated orthogonal symbol generated on the basis of N"pm data symbols whose real part is equal to 1 and whose imaginary part is equal to 0, arising from a modulation by a number N"pm, lying between Npm and $N_{FFT}$, of carriers.

3. Method (1) for interleaving symbols according to the preceding claim, in which an estimator orthogonal symbol is inserted periodically among the orthogonal symbols generated.

4. Method (1) for interleaving symbols according to one of Claims 2 and 3, in which the selection of the data carriers and the insertion at determined positions of the null carriers are performed by means of a decision threshold S' applied to the estimation of a transfer function obtained by demodulating an estimator symbol.

5. Method (1) for interleaving symbols according to one of the claims 1 to 4, in which the selection of the data carriers and the insertion at determined positions of the null carriers is performed jointly with the selection of an interleaving law under constraint of an optimal dispersion between carriers.

6. Method (1) for interleaving symbols according to the preceding claim, in which the block of carriers to be interleaved comprises, in addition to the Npm data carriers, a determined number no' of null carriers.

7. Frequency interleaver for interleaving symbols intended to be assigned to carriers of a multicarrier transmitting device comprising a module for multiplexing and modulation by $N_{FFT}$ orthogonal functions in combination with a selection of carriers, the interleaver implementing a set of carriers made up of data carriers and of null carriers, **characterized in that** it comprises:

- a means for selecting in a time-varying manner, from among the set of carriers, Npm carriers dedicated to transmitting data symbols, as a function of an estimation of a transfer function of a channel for transmitting a transmitted signal corresponding to the modulated orthogonal symbols generated from the data symbols by the multiplexing and modulation module,

- a means for inserting (3), at positions determined as a function of the estimation of a transfer function, a number no of null carriers within the previous selection so as to form a block of N'pm carriers dedicated to transmitting a block of symbols,

- a means for dynamically interleaving a block of carriers comprising the Npm data carriers.

8. Transmitting device comprising a frequency interleaver according to the preceding claim.

9. System comprising a transmitting device according to the preceding claim.

10. System according to the preceding claim further comprising a reception device comprising a module for demultiplexing and demodulation symbols by $N_{FFT}$ orthogonal functions which is able to demodulate an estimator symbol whose real part is equal to 1 and whose imaginary part is equal to 0 so as to estimate a transfer function of a transmission channel and a deinterleaver performing a deinterleaving of demodulated symbols according to a law inverse to an interleaving law implemented during the transmission of the symbols and which is able to calculate at determined instants the deinterleaving law which varies with time for a given mode of transmission.

Fig 1

Fig 2

Fig 3

Fig 4

Fig 5

$$I_{p,q}^{(j)}(k) = L_{1,p,q}(k, L_{0,p}^{(j)}(k))$$

## RÉFÉRENCES CITÉES DANS LA DESCRIPTION

**Documents brevets cités dans la description**

- US 6704366 B
- FR 00553763
- FR 00414113

**Littérature non-brevet citée dans la description**

- Radio broadcasting systems; Digital Audio Broadcasting (DAB) to mobile, portable and fixed receivers. *ETSI 300 401,* Mai 1997, 182
- **D'ANUJ BATRA et al.** TI Physical Layer Proposal for IEEE 802.15 Task Group 3a. *IEEEP802.15 Wireless personal area networks,* 12 Mai 2003
- Physical Layer Submission to 802.15 Task Group 3a : Multi-Band Orthogonal Frequency Division Multiplexing. *MBOA website,* 14 Septembre 2004